# EUROPEAN PATENT APPLICATION

(11) **EP 4 656 414 A1**
(43) Date of publication of application: **03.12.2025**
(21) Application number: 24179201.9
(22) Date of filing: 31.05.2024
(51) Int. Cl.: B60C 23/00, B60C 23/04, B60C 23/18

(54) **APPROACHES FOR TIRE CONTROL**

(71) Applicant: VOLVO TRUCK CORPORATION, 405 08 Göteborg (SE)
(72) Inventor: TRYGG, Anders, 439 36 ONSALA (SE); LAINE, Leo, 414 84 GÖTEBORG (SE); RAY, Sidhant, 431 47 MÖLNDAL (SE); HENDERSON, Leon, 438 92 HÄRRYDA (SE)
(74) Representative: Ström & Gulliksson AB

(57) **Abstract**

Approaches for tire control are disclosed, with communication between a vehicle control system and an actuator system configured to dynamically change tire properties.

The communication includes a tire control signal from the vehicle control system to the actuator system, wherein the tire control signal is indicative of one or more requested tire objective(s), and wherein each of the tire objective(s) indicates a tire property which is controllable by the actuator system.

The communication may also include a tire report signal from the actuator system to the vehicle control system, wherein the tire report signal is indicative of a current status of dynamically variable tire objective(s) capabilities, and the requested tire objective(s) may be determined based on the current status of dynamically variable tire objective(s) capabilities.

Alternatively or additionally, the requested tire objective(s) may be determined based on a tire objectives model, which is indicative of dependency between two or more tire objectives.

## Description

### TECHNICAL FIELD

The disclosure relates generally to vehicle control. In particular aspects, the disclosure relates to approaches for tire control. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of vehicle control, variations of tire properties such as inflation pressure can lead to variations of parameters such as tire wear, tire grip, and the like. It would be beneficial to elaborately control tire properties to achieve various goals such as reduced tire wear, increase tire grip, etc.

Therefore, there is a need for approaches for tire control. Preferably, the approaches are flexible and reliable.

### SUMMARY

According to a first aspect of the disclosure, a signal interface is provided for tire control. The signal interface is applicable for communication between a vehicle control system and an actuator system configured to dynamically change tire properties. The signal interface comprises connection circuitry configured to convey a tire report signal from the actuator system to the vehicle control system, wherein the tire report signal is indicative of a current status of dynamically variable tire objective(s) capabilities. The connection circuitry is also configured to convey a tire control signal from the vehicle control system to the actuator system, wherein the tire control signal is indicative of one or more requested tire objective(s) determined based on the current status of dynamically variable tire objective(s) capabilities, and wherein each of the tire objective(s) indicates a tire property which is controllable by the actuator system.

The first aspect of the disclosure may seek to enable elaborate control of tire properties to achieve various goals. A technical benefit may include that the tire control is flexible when the tire objective(s) are not reliant on a specific tire property being varied by a specific type of tire actuator (i.e., the same signal interface is usable independently of the type(s) of tire actuator(s) employed). Alternatively or additionally, a technical benefit may include that the tire control is reliable when the requested tire objective(s) are obtainable according to the current status of the dynamically variable tire objective(s) capabilities (i.e., the request is made such that is can be fulfilled by the tire actuator(s) employed).

Optionally in some examples, including in at least one preferred example, at least one of the tire objective(s) may indicate a tire property which is only indirectly controllable by the actuator system. A technical benefit may include enhancement of the general nature of the signal interface (i.e., the same signal interface is usable independently of the type(s) of tire actuator(s) employed).

Optionally in some examples, including in at least one preferred example, the tire objective(s) may include one or more of: a rolling resistance metric, a contact patch metric, a lateral force metric, a tire-ground grip metric, a tire wear metric, a stiffness metric, an audio metric, and a damping metric. A technical benefit may include enhancement of the general nature of the signal interface (i.e., the same signal interface is usable independently of the type(s) of tire actuator(s) employed), since the request relates to a goal to be achieved by the tire control (e.g., what tire property is desirable) rather than to a means to receive it (e.g., by how much a tire parameter should be changed).

Optionally in some examples, including in at least one preferred example, the current status of dynamically variable tire objective(s) capabilities may indicate a currently obtainable interval for the tire property of at least one of the tire objective(s). A technical benefit may include enhancement of the reliability of the tire control, since requests that cannot currently be fulfilled may be avoided.

Optionally in some examples, including in at least one preferred example, the tire control signal may be further indicative of a priority among the requested tire objective(s). A technical benefit may include enhancement of the reliability of the tire control, since fulfillment of the most important tire objective of a request can be prioritized in case not all tire objectives of a request are possible to fulfill.

According to a second aspect of the disclosure, a vehicle control system is provided, which comprises the signal interface of the first aspect. The vehicle control system also comprises processing circuitry configured to obtain a tire report signal from an actuator via the signal interface, wherein the tire report signal is indicative of a current status of dynamically variable tire objective(s) capabilities. The processing circuitry is also configured to determine one or more requested tire objective(s) based on the current status of dynamically variable tire objective(s) capabilities, wherein each of the tire objective(s) indicates a tire property which is controllable by the actuator system, and provide a tire control signal to the actuator system via the signal interface, wherein the tire control signal is indicative of the one or more requested tire objective(s).

The second aspect of the disclosure may seek to enable elaborate control of tire properties to achieve various goals. A technical benefit may include that the tire control is flexible when the tire objective(s) are not reliant on a specific tire property being varied by a specific type of tire actuator (i.e., the vehicle control system need not be aware of the type(s) of tire actuator(s) employed). Alternatively or additionally, a technical benefit may include that the tire control is reliable when the requested tire objective(s) are obtainable according to the current status of the dynamically variable tire objective(s) capabilities (i.e., the request is made such that is can be fulfilled by the tire actuator(s) employed).

Optionally in some examples, including in at least one preferred example, the processing circuitry may be configured to determine the one or more requested tire objective(s) to lie within the current status of dynamically variable tire objective(s) capabilities. A technical benefit may include enhancement of the reliability of the tire control, since requests that cannot currently be fulfilled are avoided.

Optionally in some examples, including in at least one preferred example, the processing circuitry may be further configured to determine a priority among the requested tire objective(s). A technical benefit may include enhancement of the reliability of the tire control, since fulfillment of the most important tire objective of a request can be prioritized in case not all tire objectives of a request are possible to fulfill.

Optionally in some examples, including in at least one preferred example, the processing circuitry may be configured to determine the one or more requested tire objective(s) further based on a motion request and/or a driving mode. A technical benefit may include that the tire control may be dynamically adapted to the currently desired vehicle motion (e.g., a maneuver) and/or to the currently desired vehicle behavior.

According to a third aspect of the disclosure, an actuator system is provided, which comprises the signal interface of the first aspect and one or more tire actuators configured to dynamically change tire properties. The actuator system also comprises processing circuitry configured to determine a current status of dynamically variable tire objective(s) capabilities, and provide a tire report signal to a vehicle control system via the signal interface, wherein the tire report signal is indicative of the current status of dynamically variable tire objective(s) capabilities. The processing circuitry is also configured to obtain a tire control signal from the vehicle control system via the signal interface, wherein the tire control signal is indicative of one or more requested tire objective(s) determined based on the current status of dynamically variable tire objective(s) capabilities, and wherein each of the tire objective(s) indicates a tire property which is controllable by the actuator system. Furthermore, the processing circuitry is configured to use the one or more tire actuators to perform tire control according to the one or more requested tire objective(s).

The third aspect of the disclosure may seek to enable elaborate control of tire properties to achieve various goals. A technical benefit may include that the tire control is flexible when the tire objective(s) are not reliant on a specific tire property being varied by a specific type of tire actuator (i.e., the same signal interface towards the vehicle control system is usable independently of the type(s) of tire actuator(s) employed). Alternatively or additionally, a technical benefit may include that the tire control is reliable when the requested tire objective(s) are obtainable according to the current status of the dynamically variable tire objective(s) capabilities (i.e., the request is made such that is can be fulfilled by the tire actuator(s) employed).

Optionally in some examples, including in at least one preferred example, at least one of the tire objective(s) may indicate a tire property which is only indirectly controllable by the actuator system and the processing circuitry may be further configured to transform the requested tire objective(s) to an indication of tire properties which is directly controllable by the actuator system. A technical benefit may include enhancement of the general nature of the signal interface (i.e., the same signal interface is usable independently of the type(s) of tire actuator(s) employed).

According to a fourth aspect of the disclosure, an arrangement is provided for tire control of a vehicle. The arrangement comprises the vehicle control system of the second aspect and the actuator system of the third aspect, wherein the vehicle control system and the actuator system are configured to communicate with each other via the signal interface of the first aspect.

The fourth aspect of the disclosure may seek to enable elaborate control of tire properties to achieve various goals. A technical benefit may include that the tire control is flexible when the tire objective(s) are not reliant on a specific tire property being varied by a specific type of tire actuator (i.e., the same signal interface and vehicle control system are usable independently of the type(s) of tire actuator(s) employed). Alternatively or additionally, a technical benefit may include that the tire control is reliable when the requested tire objective(s) are obtainable according to the current status of the dynamically variable tire objective(s) capabilities (i.e., the request is made such that is can be fulfilled by the tire actuator(s) employed).

According to a fifth aspect of the disclosure, a vehicle control system is provided, which comprises processing circuitry configured to obtain a tire objectives model indicative of dependency between two or more tire objectives; and determine one or more requested tire objective(s) based on the tire objectives model, wherein each of the tire objective(s) indicates a tire property which is controllable by an actuator system configured to dynamically change tire properties. The processing circuitry is also configured to provide a tire control signal to the actuator system via a signal interface, wherein the tire control signal is indicative of the one or more requested tire objective(s).

The fifth aspect of the disclosure may seek to enable elaborate control of tire properties to achieve various goals. A technical benefit may include that the tire control is flexible when the tire objective(s) are not reliant on a specific tire property being varied by a specific type of tire actuator (i.e., the vehicle control system need not necessarily be aware of the type(s) of tire actuator(s) employed). Alternatively or additionally, a technical benefit may include that the tire control is reliable when the requested tire objective(s) are obtainable according to the tire objectives model (i.e., the request is made such that all its elements can be fulfilled by the tire actuator(s) employed).

Optionally in some examples, including in at least one preferred example, the tire objectives model may comprise a plurality of tire objective target scenarios. A technical benefit may include that the request may be adapted to a desired goal (e.g., for one or more specific tire objective(s)).

Optionally in some examples, including in at least one preferred example, the tire objective target scenarios may include one or more of: maximization of a particular tire objective metric, minimization of a particular tire objective metric, maximization of a function of two or more tire objective metrics, and minimization of a function of two or more tire objective metrics. A technical benefit may include that the request may optimize a most important tire objective.

Optionally in some examples, including in at least one preferred example, a tire objective target scenario may define respective available tire objective ranges subject to fulfillment of the tire objective target. A technical benefit may include enhancement of the reliability of the tire control, since requests that include a combination of tire objectives which cannot be fulfilled may be avoided.

Optionally in some examples, including in at least one preferred example, a tire objective target scenario may define respective available tire objective ranges subject to an employed actuation parameter. A technical benefit may include enhancement of the flexibility of the tire control, since requests that cannot be fulfilled by one type of tire actuator might be possible to fulfill by another type of tire actuator.

Optionally in some examples, including in at least one preferred example, the employed actuation parameter may comprise a tire property which is directly controllable by the actuator system. A technical benefit may include that the tire objectives model can be tailored to the available tire actuator(s).

Optionally in some examples, including in at least one preferred example, the processing circuitry may be configured to determine the one or more requested tire objective(s) to lie within achievable boundaries defined by the tire objectives model. A technical benefit may include enhancement of the reliability of the tire control, since requests that cannot be fulfilled are avoided.

Optionally in some examples, including in at least one preferred example, the processing circuitry may be further configured to obtain a tire report signal from the actuator system, wherein the tire report signal is indicative of a current status of dynamically variable tire objective(s) capabilities, and wherein the processing circuitry may be configured to determine the one or more requested tire objective(s) further based on the current status of dynamically variable tire objective(s) capabilities. A technical benefit may include enhancement of the reliability of the tire control, since requests that cannot be fulfilled according to the current status of the dynamically variable tire objective(s) capabilities are avoided.

Optionally in some examples, including in at least one preferred example, the processing circuitry may be configured to determine the one or more requested tire objective(s) further based on a motion request and/or a driving mode. A technical benefit may include that the tire control may be dynamically adapted to the currently desired vehicle motion (e.g., a maneuver) and/or to the currently desired vehicle behavior.

Optionally in some examples, including in at least one preferred example, the tire objective(s) may include one or more of: a rolling resistance metric, a contact patch metric, a lateral force metric, a tire-ground grip metric, a tire wear metric, a stiffness metric, an audio metric, and a damping metric. A technical benefit may include enhancement of the general nature of the tire objectives modelling (i.e., the same type of tire objectives modelling is usable independently of the type(s) of tire actuator(s) employed), since the tire objectives model express goal(s) to be achieved by the tire control (e.g., what tire property is desirable) rather than means to receive it (e.g., by how much a tire parameter should be changed).

According to a sixth aspect of the disclosure, an actuator system is provided, which comprises one or more tire actuators configured to dynamically change tire properties. The actuator system also comprises processing circuitry configured to provide a tire objectives model to a vehicle control system, wherein the tire objectives model is indicative of dependency between two or more tire objectives. The processing circuitry is also configured to obtain a tire control signal from the vehicle control system via a signal interface, wherein the tire control signal is indicative of the one or more requested tire objective(s) determined based on the tire objectives model, and wherein each of the tire objective(s) indicates a tire property which is controllable by the actuator system, and use the one or more tire actuators to perform tire control according to the one or more requested tire objective(s).

The sixth aspect of the disclosure may seek to enable elaborate control of tire properties to achieve various goals. A technical benefit may include that the tire control is reliable when the requested tire objective(s) are obtainable according to the tire objectives model (i.e., the request is made such that all its elements can be fulfilled by the tire actuator(s) employed).

Optionally in some examples, including in at least one preferred example, at least one of the tire objective(s) may indicate a tire property which is only indirectly controllable by the actuator system, and wherein the processing circuitry is further configured to transform the requested tire objective(s) to an indication of tire properties which is directly controllable by the actuator system. A technical benefit may include enhancement of the general nature of the actuator system deployment (i.e., the vehicle control system need not be aware of the type(s) of tire actuator(s) employed).

According to a seventh aspect of the disclosure, a vehicle is provided, which comprises one or more of: the signal interface of the first aspect, the vehicle control system of the second aspect, the actuator system of the third aspect, the arrangement of the fourth aspect, the vehicle control system of the fifth aspect, and the actuator system of the sixth aspect.

The seventh aspect of the disclosure may seek to provide a vehicle configured with elaborate control of tire properties to achieve various goals. A technical benefit may include flexible and reliable control of tire properties, which in turn enables improved vehicle control.

According to an eighth aspect of the disclosure, a computer-implemented method is provided for tire control. The method comprises obtaining (by processing circuitry of a computer system) a tire report signal from an actuator system configured to dynamically change tire properties, wherein the tire report signal is indicative of a current status of dynamically variable tire objective(s) capabilities, determining (by the processing circuitry) one or more requested tire objective(s) based on the current status of dynamically variable tire objective(s) capabilities, wherein each of the tire objective(s) indicates a tire property which is controllable by the actuator system, and providing (by the processing circuitry) a tire control signal to the actuator system, wherein the tire control signal is indicative of the one or more requested tire objective(s).

The eighth aspect of the disclosure may seek to enable elaborate control of tire properties to achieve various goals. A technical benefit may include that the tire control is flexible when the tire objective(s) are not reliant on a specific tire property being varied by a specific type of tire actuator (i.e., the vehicle control system need not be aware of the type(s) of tire actuator(s) employed). Alternatively or additionally, a technical benefit may include that the tire control is reliable when the requested tire objective(s) are obtainable according to the current status of the dynamically variable tire objective(s) capabilities (i.e., the request is made such that is can be fulfilled by the tire actuator(s) employed).

According to a ninth aspect of the disclosure, a computer-implemented method is provided for tire control. The method comprises obtaining (by processing circuitry of a computer system) a tire objectives model indicative of dependency between two or more tire objectives, determining (by the processing circuitry) one or more requested tire objective(s) based on the tire objectives model, wherein each of the tire objective(s) indicates a tire property which is controllable by an actuator system configured to dynamically change tire properties, and providing (by the processing circuitry) a tire control signal to the actuator system via a signal interface, wherein the tire control signal is indicative of the one or more requested tire objective(s).

The ninth aspect of the disclosure may seek to enable elaborate control of tire properties to achieve various goals. A technical benefit may include that the tire control is flexible when the tire objective(s) are not reliant on a specific tire property being varied by a specific type of tire actuator (i.e., the vehicle control system need not necessarily be aware of the type(s) of tire actuator(s) employed). Alternatively or additionally, a technical benefit may include that the tire control is reliable when the requested tire objective(s) are obtainable according to the tire objectives model (i.e., the request is made such that all its elements can be fulfilled by the tire actuator(s) employed).

According to a tenth aspect of the disclosure, a non-transitory computer-readable storage medium is provided. The non-transitory computer-readable storage medium comprises instructions, which when executed by the processing circuitry, cause the processing circuitry to perform the method of any of the eighth or ninth aspect.

The tenth aspect of the disclosure may seek to convey program code for improving vehicle control. A technical benefit may include that new vehicles and/or legacy vehicles may be conveniently configured, by software installation/update, to enable elaborate control of tire properties to achieve various goals.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic drawing illustrating an arrangement for tire control of a vehicle according to some examples.
**FIG. 2** is a schematic drawing illustrating a vehicle according to some examples.
**FIG. 3** is a schematic drawing illustrating an arrangement for tire control of a vehicle according to some examples.
**FIG. 4** is a combination of two flowcharts illustrating respective methods and corresponding signaling according to some examples.
**FIG. 5** is a combination of two flowcharts illustrating respective methods and corresponding signaling according to some examples.
**FIG. 6** is a schematic drawing illustrating principles of a tire objectives model according to some examples.
**FIG. 7** is a schematic drawing illustrating principles of a tire objectives model according to some examples.
**FIG. 8** is a schematic diagram illustrating a computer system for implementing examples disclosed herein, according to some examples.
**FIG. 9** is a schematic drawing illustrating a computer program product, in the form of a non-transitory computer-readable storage medium, according to some examples.
**FIG. 10** is a schematic block diagram of a control unit according to some examples.

### DETAILED DESCRIPTION

The detailed description set forth below provides information and examples of the disclosed technology with sufficient detail to enable those skilled in the art to practice the disclosure.

It is possible to control characteristics of a tire in various ways.

For example, tire characteristics may be adjusted by changing the tire pressure using a pressure actuator (e.g., inflating the tire by pumping a controlled amount of air via one or more vent(s) that accesses the tire interior, and/or deflating the tire by releasing a controlled amount of air via one or more vent(s) that accesses the tire interior). The vent(s) used for pressure actuation can comprise any vent(s) configured for manual pressure changes. Alternatively or additionally, the vent(s) used for pressure actuation can comprise vent(s) which are not configured for manual pressure changes. Further, vent(s) used for increasing pressure may coincide with , or may be separate from, vent(s) used for decreasing pressure. A typical example of pressure actuation includes air canal(s) and vent(s) running along the wheel axis (to enable pressure actuation when the vehicle is in motion). US 2018/0297423 A1 describes an automatic tire inflation system, which may be used in this context.

Alternatively or additionally, tire characteristics may be adjusted by changing the tire temperature using a temperature actuator (e.g., heating the exterior of the tire by infra-red light and/or induction heating, heating the exterior and/or interior of the tire by induction, and/or cooling the exterior of the tire by spraying of water). Generally, an increased tire temperature may soften the tire material, which can, for example, increase tire characteristics such as grip.

Yet alternatively or additionally, tire characteristics may be adjusted by changing strength of a magnetic field applied to the tire using a magnet actuator (e.g., changing a distance between a tire surface and a movable magnet with fixed magnetic field and/or varying the magnetic field of an electro-magnetic arrangement close to the tire, etc.). Since the tire comprises various metals, application of a magnetic field may, for example, increase the tire temperature, change form and/or size of the contact patch, change the structural properties of the tire material, etc. Tire actuation by application of a magnetic field may be particularly useful for non-inflatable (air-less) tires.

It should be noted that the control of tire characteristics may be performed jointly for one or more tires of the vehicle, such that the same - or different - actuation is applied to different tires. For example, if one side of the vehicle is exposed to sunlight and the other is not, it may be preferable to apply different pressure actuation for the different sides to achieve similar behavior for all tires.

Changing such tire characteristics that are directly controllable by tire actuators (e.g., pressure, temperature, etc.) typically leads to a change also in other tire characteristics. For example, increased pressure may lead to decreased rolling resistance, increased temperature may lead to increased grip, etc.

Some examples of such other tire characteristics include (but are not limited to) rolling resistance, contact patch size, maximum lateral force, tire grip (or tire-ground friction), tire wear, stiffness, audio noise, etc. Alternatively or additionally, some examples of such other tire characteristics include upper and/or lower limits for what is possible to achievable for one or more tire force(s) (e.g., longitudinal force, lateral force, normal force) and/or for one or more tire moment(s) (e.g., roll moment, pitch moment, yaw moment).

As already mentioned, it would be beneficial to be able to employ elaborate tire control to achieve desirable properties for the tire, which desirable properties may possibly vary dynamically (e.g., over time, with load, depending on driving mode, depending on a current motion request, etc.).

Therefore, there is disclosed herein approaches for automated tire control. In some examples, the approaches provide dynamic, flexible, and reliable tire control.

The dynamicity may be provided in that the tire control may be performed at standstill or when the vehicle is in motion, as suitable, using tire actuators that are mounted in association with the tire (e.g., within the wheel, in or on the wheel axle, etc.).

The flexibility may be provided in that a signal interface is applied between the tire actuators and a vehicle control system, which signal interface is independent on the type of tire actuators that are used. Thus, the tire actuators may vary between different vehicles while the rest of the arrangement can be kept unchanged. Further, in a vehicle that has several types of tire actuators deployed, any suitable one or more of the tire actuators can be used to fulfill a request from the vehicle control system, without the vehicle control system having to specify which type of tire actuator should be used.

The reliability may be provided in that the risk is reduced of the vehicle control system requesting something that cannot be obtained. The reliability may be accomplished by reporting the current status of dynamically variable capabilities of the tire actuators to the vehicle control system, such that the vehicle control system can restrict the request to something that falls within the reported capabilities. Alternatively or additionally, the reliability may be accomplished by the vehicle control system restricting the request to something that is achievable according to a model, which model indicates dependencies between tire characteristics.

Generally, a tire actuator is meant to encompass any device or arrangement that is configured to influence one or more characteristics of a tire. Examples include (but are not limited to) pressure actuators, temperature actuators, etc.

Also generally, the term "tire property" is meant to encompass any one or more characteristic(s) of a tire that is possible to adjust via a tire actuator. Examples include (but are not limited to) pressure, temperature, rolling resistance, contact patch size, maximum lateral force, tire grip (or tire-ground friction), tire wear, stiffness, audio noise, etc.

Also generally, the term "actuation parameter" is meant to encompass any characteristic of a tire that is possible to control *directly* via a tire actuator. Examples include (but are not limited to) pressure, temperature, etc. Thus, an actuation parameter is a type of tire property.

Also generally, the term "tire objective" is meant to encompass any one or more characteristic(s) of a tire for which some type of target (or goal) can be requested by the vehicle control system. Typically, a tire objective is a characteristic of a tire that is only possible to control *indirectly* via a tire actuator (a.k.a., a "higher level parameter"). Examples include (but are not limited to) rolling resistance, contact patch size, maximum lateral force, tire grip (or tire-ground friction), tire wear, stiffness, audio noise, etc. However, in some examples, a tire objective may be a characteristic of a tire that is possible to control *directly* via a tire actuator (e.g., pressure, temperature, etc.). Thus, a tire objective is a type of tire property.

Also generally, the term "tire objective capability" is meant to denote the tire objective which it is possible to achieve with the actuators at hand, and the term "current status of dynamically variable tire objective capability" is meant to encompass the tire objective which it is possible to achieve with the actuators at hand and in the current situation. This may depend, for example, on the status of each actuator (e.g., enabled/disabled, malfunctioning, reduced functionality, etc.) and/or on the status of the tire (e.g., pressure, temperature, etc.).

Also generally, the term "tire objective target" is meant to denote a goal (e.g., a value, an interval, maximization, minimization, etc.) for a tire objective.

Also generally, the term "tire objective target scenario" is meant to denote a desired situation specified by one or more tire objective targets (possible ranked in an order of priority).

Also generally, the term "tire objective model" is meant to denote a specification of dependencies between different tire objectives. Typically, the tire objective model comprises a collection of tire objective target scenarios, wherein each scenario specifies dependencies between different tire objectives through available tire objective ranges in that specific scenario (e.g., subject to fulfillment of the tire objective target and/or subject to an employed actuation parameter; selected based on the available tire actuators).

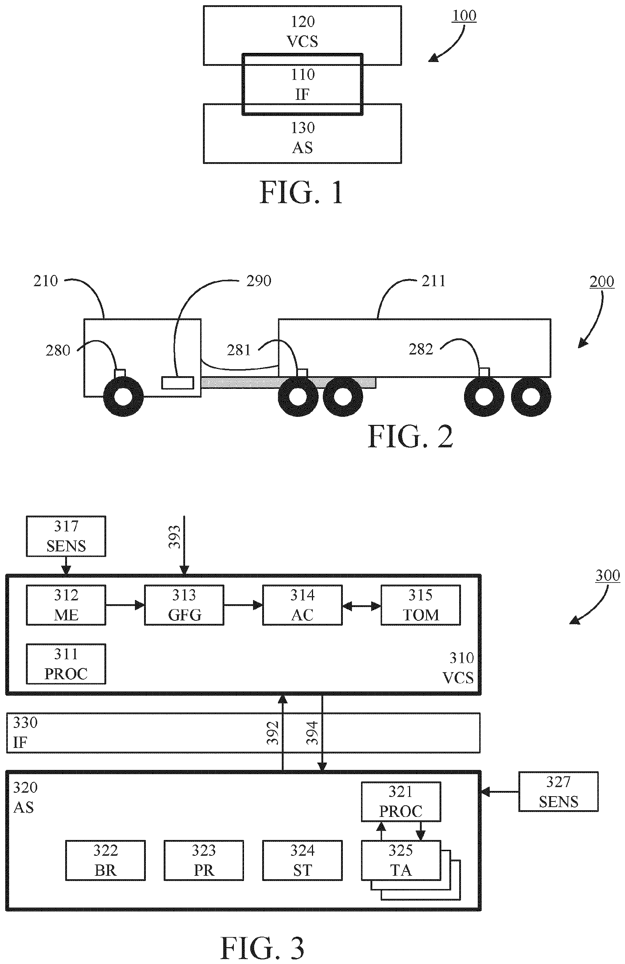

**FIG. 1** schematically illustrates an arrangement **100** for tire control of a vehicle according to some examples. The arrangement **100** comprises a vehicle control system (VCS) 120 and an actuator system (AS) **130**.

The arrangement **100** is suitable to be comprised in a vehicle. For example, the VCS **120** may be implemented by a vehicle control unit (VCU), or collectively by two or more VCUs. Alternatively or additionally, the VCS **120** may be implemented by, or otherwise associated with, a vehicle motion management (VMM) function.

The AS **130** may be a single actuator system configured to collectively control all actuatable wheels of the vehicle, or the AS **130** may comprise two or more actuator systems/sub-systems (e.g., one per actuatable wheel, or one per group of actuatable wheels, wherein a group of actuatable wheels may, for example, comprise all wheels associated with a wheel axle, all actuatable wheels of a vehicle unit, etc.).

The VCS **120** and the AS **130** are configured to communicate with each other via a signal interface (IF) **110**. As illustrated in **FIG. 1**, the IF **110** may be partially comprised in the VCS **120** and partially comprised in the AS **130**. Alternatively or additionally, the IF **110** may comprise a separate device for operatively connecting the VCS **120** and the AS **130**.

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **211** in a known manner. Each of the truck/tractor/towing unit **210** and the trailer unit(s) **211** may be termed as a vehicle unit.

The tractor unit **210** and/or any of the trailer unit(s) **211** may comprise an actuator system **280**, **281**, **282** (compare with AS **130** of **FIG. 1**) configured to actuate one or more wheel(s) of the vehicle.

Further, the tractor unit **210** and/or any of the trailer unit(s) **211** may comprise a vehicle control unit (VCU) **290** configured to perform various vehicle (unit) control functions, such as vehicle motion management (VMM), based on a vehicle-specific operating conditions model. For example, the VCU **290** may comprise processing circuitry for implementing the VCS **120** of **FIG. 1**.

**FIG. 3** schematically illustrates an arrangement **300** for tire control of a vehicle according to some examples. For example, the arrangement **300** may be seen as a variant of the arrangement **100** of **FIG. 1**. The arrangement **300** comprises a vehicle control system (VCS) **310**, an actuator system (AS) **320**, and a signal interface (IF) **330** there between.

The arrangement **300** of **FIG. 3** may be configured to implement functionality for controlling a wheel by some example actuators (a.k.a. motion support devices; MSDs). In the example of **FIG. 3**, the actuators comprise a braking device (BR) **322**, a propulsion device (PR) **323**, a steering device (ST) **324**, and one or more tire actuator(s) (TA) **325**.

Generally, actuators can be controlled by one or more actuation controllers. In the example of **FIG. 3**, the actuators **322**, **323**, **324**, **325** are controlled by an actuator control function (AC) **314** in the VCS **310** via processing circuitry **321** of the actuator system **320**.

The VCS **310** typically receives motion requests **393** from some higher level control function (e.g., a traffic situation management (TSM) function and/or driver input functions, such as steering wheel, accelerator pedal, brake pedal, etc.). For example, the motion requests **393** may be associated with acceleration profiles and/or curvature profiles which describe a desired vehicle movement for a given maneuver. The VCS **310** may be configured to perform, e.g., force allocation (e.g., yaw moments, longitudinal forces, lateral forces, wheel torques, etc.) to meet the requests **393** in a safe and robust manner and to communicate corresponding actuation requests to the actuator system via control signaling **394**. In some examples, the VCS **310** may be further configured to take into account a current driving mode (e.g., sport, comfort, eco, etc.) when performing force allocation.

The VCS **310** typically has access to sensor data from one or more on-board vehicle sensor(s) (SENS) **317**, and the vehicle control may be based on the sensor data. The sensor(s) can be any suitable sensor(s) (e.g., global positioning system (GPS) receivers, vision-based sensors, wheel speed sensors, radar sensors, etc.).

When the VCS **310** implements vehicle motion management (VMM), it may employ a motion estimation (ME) function **312**, a global force generation (GFG) function **313**, and an actuator control (AC) function **314**.

The motion estimation function **312** may be configured to provide (e.g., based in the sensor data) measured/estimated parameters representing the current motion of the vehicle to the global force generation function **313**. For example, these parameters may comprise one or more of: vertical force, friction between road and tire, vehicle velocities in relation to a vehicle-centered coordinate system, road gradient (or road slope), and road banking.

The global force generation function **313** may be configured to determine global forces elements based on the parameters provided from the motion estimation function **312** and representing the current motion of the vehicle, and based on motion requests **393**. The global force generation function **313** may also be configured to provide the determined global forces elements to the actuator control function **314**.

The actuator control function **314** may be configured to receive information **392** regarding the actuators of the vehicle. The actuator control function **314** may be further configured to determine actuator requests **394** based on the determined global forces elements provided from the global force generation function **313** and the information **392** provided from the actuator system **320** and provide the actuator requests **394** to the actuator system **320** for operation of the actuator(s).

The VCS **310** typically comprises processing circuitry (PROC) **311** to implement one or more of the motion estimation function **312**, the global force generation function **313**, and the actuator control function **314**.

According to approaches presented herein, the signal interface **330** is suitable for tire control, and is applicable for communication between the vehicle control system **310** and the actuator system **320**, wherein the actuator system **320** is configured to dynamically change tire properties by use of one or more tire actuators **325**. Typically, there may be two or more (types) of tire actuators (e.g., pressure, temperature, etc.) deployed. Alternatively or additionally, it may be desirable to use different (types) of tire actuators for different vehicles, different vehicle models, for the same vehicle over time (addition/removal/replacement of actuator type(s) while using the same interface), etc.

In some examples, the signal interface **330** is generic (at least in relation to the tire actuators **325**) such that the signaling **392**, **394** relate to higher level parameters than those directly controllable by the (tire) actuators. Thereby, the same interface **330** and the same VCS **310** can be used for different sets of (tire) actuators, which leads to that vehicles can be flexibly equipped w.r.t. the (tire) actuators.

To this end, the signal interface **330** may comprise connection circuitry configured to convey a tire report signal **392** from the actuator system **320** to the vehicle control system **310**, wherein the tire report signal is indicative of a current status of dynamically variable tire objective(s) capabilities. The connection circuitry of the signal interface **330** may also be configured to convey a tire control signal **394** from the vehicle control system **310** to the actuator system **320**, wherein the tire control signal is indicative of one or more requested tire objective(s). The requested tire objective(s) are determined based on the current status of dynamically variable tire objective(s) capabilities, and each of the tire objective(s) indicates a tire property which is controllable by the actuator system.

Typically, at least one (typically each) of the tire objective(s) indicates a tire property which is only indirectly controllable by the actuator system **320**. This leads to the generic nature of the signal interface **330**. Thereby, the signal interface **330** and the VCS **310** can be used independently of which (types of) tire control actuators are available to implement the tire control.

Also typically, the tire report signal **392** indicates a current capability for at least one (typically each) of the tire objective(s) which are available for request by the tire control signal **394**. The dynamic nature of the tire objective(s) capabilities can, for example, depend on the status of each actuator (e.g., enabled/disabled, malfunctioning, reduced functionality, etc.) and/or on the status of the tire (e.g., pressure, temperature, etc.). For example, for a fully inflated tire there is no capacity to increase pressure to enable a corresponding change in some tire property, for a malfunctioning heating actuator there is no capacity to increase temperature to enable a corresponding change in some tire property, etc.

The VCS **310** can then determine (e.g., using the processing circuitry **311** and/or the motion estimation function **312** and/or the actuator control function **314**) the one or more requested tire objective(s) based on the current status of dynamically variable tire objective(s) capabilities such that the one or more requested tire objective(s) lie(s) within the current status of dynamically variable tire objective(s) capabilities. The knowledge transfer (via the tire report signal **392**) regarding the current status of dynamically variable capabilities of the tire actuator(s) to provide tire objective(s) leads to more reliable tire control since requests that cannot be fulfilled in the current situation can be avoided in the tire control signal **394**.

The current status of the dynamically variable tire objective(s) capabilities may indicate a currently obtainable interval for the tire property of at least one (e.g., all) of the tire objective(s). Alternatively or additionally, the current status of the dynamically variable tire objective(s) capabilities may indicate a metric for the tire property of at least one (e.g., all) of the tire objective(s), which metric indicates what is possible to achieve in the current situation for the tire property. The metric may be an absolute metric or a relative metric (e.g., indicating an available change from a current state of the tire property, and/or indicating an available change from a nominal, default, state of the tire property).

The requested tire objective(s) may indicate a desirable value or a desirable interval for the tire property of at least one (e.g., all) of the tire objective(s). Alternatively or additionally, the requested tire objective(s) may be expressed in terms of a metric for the tire property of at least one (e.g., all) of the tire objective(s), which metric indicates what is desirable for the tire property. The metric may be an absolute metric or a relative metric (e.g., indicating a desired change from a current state of the tire property). For example, the metric used for the requested tire objective(s) may correspond to the metric used for the current status of the dynamically variable tire objective(s) capabilities.

Some example metrics include (but are not limited to) a rolling resistance metric, a contact patch metric (e.g., contact patch size, such as area), a lateral force metric (e.g., maximum lateral force), a tire-ground grip metric, a tire-ground friction metric (e.g., friction coefficient), a tire wear metric, a stiffness metric (e.g., vertical stiffness), an audio metric (e.g., produced noise), a damping metric (e.g., vertical damping), etc.

To further exemplify; the tire report signal **392** could indicate that it is possible - given the deployed tire actuators and the current situation - to decrease the rolling resistance by 10% and reduce noise by 5%, while it is not possible to reduce tire wear, and the tire control signal **394** may respond by requesting a reduction of the rolling resistance by 8% and a reduction of the noise by 5%, for example.

The AS **320** may be configured to determine the current status of the dynamically variable tire objective(s) capabilities and provide the tire report signal **392** to the VCS **310**, via the signal interface **330**. For example, processing circuitry (PROC) **321** of the AS **320** may be configured to query the tire actuator(s) **325** to acquire their respective current capabilities, and transform the tire actuator capabilities to tire objective(s) capabilities (e.g., by using a look-up table mapping actuation parameter combination(s) to corresponding tire objective(s) capabilities). Possibly, the processing circuitry **321** may also receive sensor data from one or more sensor(s) (SENS) **327** associated with the tire (e.g., pressure sensor(s) - such as a tire pressure monitoring system (TPMS), temperature sensor(s), etc.), and include that information when transforming the tire actuator capabilities to tire objective(s) capabilities.

Furthermore, when the AS **320** obtains a tire control signal from the VCS **310** via the signal interface **330**, it may be configured to use the one or more tire actuators **325** to perform tire control according to the one or more requested tire objective(s) of the tire control signal. For example, when at least one of the tire objective(s) indicates a tire property which is only indirectly controllable by the actuator system, the processing circuitry **321** may be configured to transform the requested tire objective(s) to an indication of tire properties which is directly controllable by the actuator system, and then use the corresponding tire actuator(s) **325** accordingly.

The determination of the one or more requested tire objective(s) by the VCS **310** may be further based on a motion request **393** and/or a driving mode. For example, when a motion request **393** specifies a specific steering/acceleration, the tire properties may be changed to better accommodate the motion request (e.g., increase maximum lateral force to better achieve steering request, increase grip to better achieve acceleration request, etc.). When a specific driving mode is active (e.g., sport, comfort, eco, etc.), the tire properties may be changed to better abide to the driving mode profile (e.g., decrease rolling resistance to extend range in eco driving mode, decrease audio noise in comfort driving mode, etc.). Alternatively or additionally, a driving mode may be specifically targeting corresponding one or more tire objective(s) (e.g., an extended range mode can correspond to relatively low rolling resistance, an extended tire lifetime mode can correspond to relatively low tire wear, etc.).

In some situations, there may be a dependency between two or more tire objectives. This can manifest itself in that it is not possible to simultaneously achieve, for all tire objectives, any value within the full capacity of each of the tire objectives. For example, it may not be possible to simultaneously achieve minimum rolling resistance and maximum grip, it may not be possible to simultaneously achieve maximum contact patch size and minimum audio noise, etc. This problem may be tackled in various ways.

For example, an approach to handle dependency between two or more tire objectives is to let the tire control signal **394** further indicate a priority among the requested tire objectives, as determined by the VCS **310**. For example, the tire control signal **394** may indicate one or more of the requested tire objectives as a most important to fulfill, and/or may rank the requested tire objectives in an order of importance to fulfill.

Alternatively or additionally, an approach to handle dependency between two or more tire objectives is to let the VCS **310** have access to a tire objectives model (TOM) **315**, which is indicative of the dependency between two or more tire objectives. The tire objectives model may be static, or it may be dynamically changing (e.g., in dependence of the current status of dynamically variable tire objective(s) capabilities and/or based on other dynamic influences).

The tire objectives model **315** may be obtained by the VCS **310** in any suitable way. For example, it may be determined by the AS **320** and provided to the VCS **310** (e.g., via the tire report signal **392**). When the tire objectives model is static, it can be obtained by the VSC **310** once, or very seldom, from any suitable source (e.g., the AS **320** or from a remote source, such as a cloud service). When the tire objectives model is dynamic, it can be obtained by the VSC **310** repeatedly (e.g., with the tire report signal **392**, or more seldom), from any suitable source (e.g., the AS **320**).

It should be noted that the approach related to the tire objectives model **315** may be applied together with the approach where the signal interface **330** has a generic nature (relating to higher level parameters than those directly controllable by the tire actuators), but it may also be applied in scenarios where the signal interface **330** relates to parameters that are directly controllable by the tire actuators (i.e., actuation parameters). Correspondingly, the tire objectives model **315** may be defined only for tire properties (higher level parameters) which are only possible to control *indirectly* via a tire actuator, or the tire objectives model **315** may be defined only for tire properties (actuation parameters) which are possible to control *directly* via a tire actuator, or the tire objectives model **315** may be defined for a combination of tire properties (higher level parameters) which are only possible to control *indirectly* via a tire actuator tire properties (actuation parameters) which are possible to control *directly* via a tire actuator.

The VCS **310** may be configured to determine one or more requested tire objective(s) based on the tire objectives model, and provide a tire control signal **394** to the actuator system accordingly, as explained herein. For example, the one or more requested tire objective(s) may be determined such that they collectively lie within achievable boundaries defined by the tire objectives model.

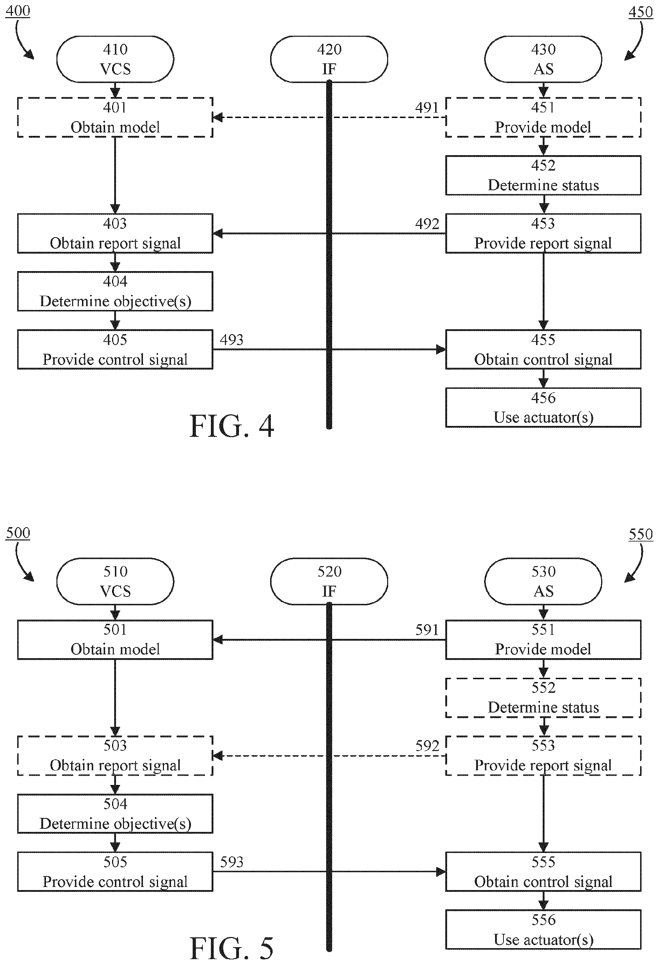

**FIG. 4** illustrates two computer-implemented methods for tire control **400** and **450** and corresponding signaling according to some examples. For example, each of the methods **400** and **450** may be performed by processing circuitry of a computer system.

The method **400** is for execution by a vehicle control system (VCS) **410** (compare with **120** of **FIG. 1**, 290 of **FIG. 2**, and 310 of **FIG. 3**), the method **450** is for execution by an actuator system (AS) **430** (compare with **130** of **FIG. 1**, 280, 281, 282 of **FIG. 2****,** and 320 of **FIG. 3**), and the communication signaling takes place between the VCS **410** and the AS **430** via a signal interface (IF) **420** (compare with **110** of **FIG. 1**, and 330 of **FIG. 3**).

According to the methods **400** and **450,** the AS **430** determines a current status of dynamically variable tire objective(s) capabilities, as illustrated by **452**, and provides a tire report signal **492** to the VCS **410** via the IF **420**, as illustrated by **453**, wherein the tire report signal is indicative of the current status of dynamically variable tire objective(s) capabilities. The VCS **410** obtains the tire report signal **492** from the AS **430** via the IF **420**, as illustrated by **403**.

Also according to the methods **400** and **450**, the VCS **410** determines one or more requested tire objective(s) based on the current status of dynamically variable tire objective(s) capabilities, as illustrated by **404,** wherein each of the tire objective(s) indicates a tire property which is controllable by the actuator system **430**, and provides a tire control signal **493** to the AS **430** via the IF **420**, as illustrated by **405**, wherein the tire control signal is indicative of the one or more requested tire objective(s). The AS **430** obtains the tire control signal **493** from the VCS **410** via the IF **420**, as illustrated by **455**, and uses one or more tire actuators (compare with **325** of **FIG. 3**) to perform tire control according to the one or more requested tire objective(s), as illustrated by **456**.

In some examples, the VCS **410** can obtain a tire objectives model indicative of dependency between two or more tire objectives, as illustrated by **401**. Then, the determination **404** of one or more requested tire objective(s) may be further based on the tire objectives model. For example, the tire objectives model may be provided by the AS **430** via a model report signal **491**, as illustrated by **451**. The model report signal **491** can be transmitted once or repeatedly, and it may - or may not - be comprised in the tire report signal **492**.

**FIG. 5** illustrates two computer-implemented methods for tire control **500** and **550** and corresponding signaling according to some examples. For example, each of the methods **500** and **550** may be performed by processing circuitry of a computer system.

The method **500** is for execution by a vehicle control system (VCS) **510** (compare with **120** of **FIG. 1**, 290 of **FIG. 2**, and 310 of **FIG. 3**), the method **550** is for execution by an actuator system (AS) **530** (compare with **130** of **FIG. 1**, 280, 281, 282 of **FIG. 2**, and 320 of **FIG. 3**), and the communication signaling takes place between the VCS **510** and the AS **530** via a signal interface (IF) **520** (compare with **110** of **FIG. 1**, and 330 of **FIG. 3**).

According to the methods **500** and **550,** the VCS **510** obtains a tire objectives model indicative of dependency between two or more tire objectives, as illustrated by **501**. For example, the tire objectives model may be (determined and) provided by the AS **530** via a model report signal **591**, as illustrated by **551**. The model report signal **591** can be transmitted once or repeatedly, and it may - or may not - be comprised in the tire report signal **592**.

Also according to the methods **500** and **550,** the VCS **510** determines one or more requested tire objective(s) based on the tire objectives model, as illustrated by **504**, wherein each of the tire objective(s) indicates a tire property which is controllable by the actuator system **530**, and provides a tire control signal **593** to the AS **530** via the IF **520**, as illustrated by **505**, wherein the tire control signal is indicative of the one or more requested tire objective(s). The AS **530** obtains the tire control signal **593** from the VCS **510** via the IF **520**, as illustrated by **555**, and uses one or more tire actuators (compare with **325** of **FIG. 3**) to perform tire control according to the one or more requested tire objective(s), as illustrated by **556**.

In some examples, the AS **530** can determine a current status of dynamically variable tire objective(s) capabilities, as illustrated by **552**, and provide a tire report signal **592** to the VCS **510** via the IF **520**, as illustrated by **553**, wherein the tire report signal is indicative of the current status of dynamically variable tire objective(s) capabilities. Then, the VCS **510** may obtain the tire report signal **592** from the AS **530** via the IF **520**, as illustrated by **503**, and the determination **504** of one or more requested tire objective(s) may be further based on the current status of dynamically variable tire objective(s) capabilities.

Generally, a tire objectives model indicative of dependency between two or more tire objectives may be expressed in any suitable way. A tire objective of the two or more tire objectives may (typically) relate to a corresponding tire property which is only indirectly controllable by the actuator system, but may (alternatively) to a corresponding tire property which is directly controllable by the actuator system.

For example, the tire objectives model can indicate an obtainable interval for the tire property of at least one of the two or more tire objectives, subject to fulfillment of a target for the tire property of at least one other of the two or more tire objectives (e.g., it may not be possible to simultaneously minimize rolling resistance and maximize grip, it may not be possible to simultaneously maximize contact patch size and minimize noise, etc.).

Alternatively or additionally, the tire objectives model can indicate an obtainable interval for the tire property of at least one of the two or more tire objectives, subject to an employed actuation parameter (e.g., what can be achieved by varying the temperature, what can be achieved by varying the inflation, etc.).

Typically, the tire objectives model may comprises a plurality of tire objective target scenarios (e.g., maximization - or increase - of a particular tire objective metric, minimization - or decrease - of a particular tire objective metric, maximization - or increase - of a function of two or more tire objective metrics, minimization - or decrease - of a function of two or more tire objective metrics, etc.). Each tire objective target scenario can define respective available tire objective ranges subject to fulfillment of the tire objective target and/or subject to an employed actuation parameter (e.g., a tire property which is directly controllable by the actuator system).

The obtainable interval for a tire property of a tire objectives model may be indicated in any suitable way. For example, a metric may be used for the tire property, which metric may be an absolute metric or a relative metric (e.g., indicating a range in relation to a nominal, default, state of the tire property).

It should be noted that the obtainable interval for a tire property of a tire objectives model may be a single value in some cases.

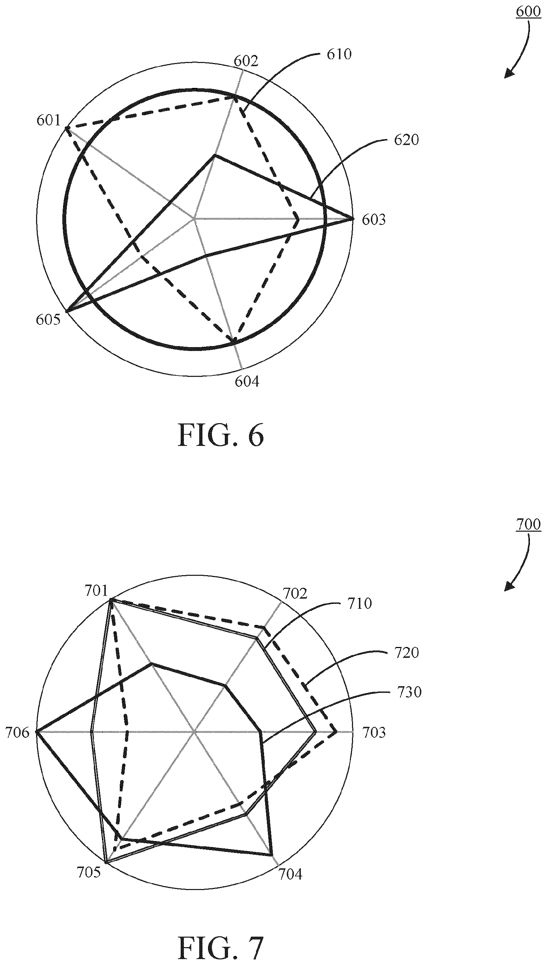

**FIG. 6** illustrates some principles of a tire objectives model **600** according to some examples. The tire objectives model **600** involves five tire objectives: rolling resistance as indicated along the axis **601**, stiffness as indicated along the axis **602**, friction as indicated along the axis **603**, lateral force capacity as indicated along the axis **604**, and contact patch size as indicated along the axis **605**.

Each tire objective is indicated using a metric over the interval between 0.0 (center of the diagram) to 1.2 (outer circle of the diagram; corresponding to a most desirable value for the corresponding tire objective, such as an "extreme" (maximum/minimum) value for the corresponding tire objective: minimized rolling resistance, maximized stiffness, maximized friction, maximized lateral force capacity, and maximized contact patch size). The nominal state of the tire property of each tire objective corresponds to a metric of 1.0 (bold circle of the diagram).

Two tire objective target scenarios are illustrated: "optimized rolling resistance" 610, and "optimized off-road traction" **620**.

In the tire objective target scenario "optimized rolling resistance" **610**, minimized rolling resistance is the goal, as illustrated by taking the metric value 1.2 along the axis **601**. Obtainable intervals - subject to minimized rolling resistance - for one or more of the other tire objectives (stiffness, friction, lateral force capacity, and contact patch size) can range from the metric value 0.0 to the crossing of respective axes **602**, **603**, **604**, **605** by the dashed line representing this scenario **610** (or from some metric value higher than 0.0 but lower than the crossing of respective axes **602**, **603**, **604**, **605** by the dashed line). Alternatively or additionally, one or more of the other tire objectives (stiffness, friction, lateral force capacity, and contact patch size) automatically gets the metric value that corresponds to the crossing of respective axes **602**, **603**, **604**, **605**, when rolling resistance is minimized in this scenario. The minimized rolling resistance and the obtainable interval or metric value for the other tire objectives are examples of achievable boundaries defined by the tire objectives model **600**.

In the tire objective target scenario "optimized off-road traction" **620**, maximized friction and contact patch size is the goal, as illustrated by taking the metric value 1.2 along the axes **603** and **605**. Obtainable intervals - subject to maximized friction and contact patch size - for one or more of the other tire objectives (rolling resistance, stiffness, and lateral force capacity) ranges from the metric value 0.0 to the crossing of respective axes **601**, **602**, **604** by the solid line representing this scenario **620** (or from some metric value higher than 0.0 but lower than the crossing of respective axes **601**, **602**, **604** by the solid line). Alternatively or additionally, one or more of the other tire objectives (rolling resistance, stiffness, and lateral force capacity) automatically gets the metric value that corresponds to the crossing of respective axes **601**, **602**, **604**, when friction and contact patch size are maximized in this scenario. The maximized friction and contact patch size and the obtainable interval or metric value for the other tire objectives are examples of achievable boundaries defined by the tire objectives model **600**.

It should be noted that some tire objective(s) may not even have their nominal state available when optimizing one or more other tire objective(s). In the scenario "optimized rolling resistance" **610**, the nominal values of friction and contact patch size are out of reach. In the scenario "optimized off-road traction" **620**, the nominal values of rolling resistance, stiffness, and lateral force capacity are out of reach.

**FIG. 7** illustrates some principles of a tire objectives model **700** according to some examples. The tire objectives model **700** involves six tire objectives: rolling resistance as indicated along the axis **701**, sound (audio noise) as indicated along the axis **702**, tire wear as indicated along the axis **703**, friction as indicated along the axis **704**, stiffness as indicated along the axis **705**, and contact patch size as indicated along the axis **706**.

Each tire objective is indicated as peaking at the outer circle of the diagram (corresponding to a most desirable value for the corresponding tire objective, such as an "extreme" (maximum/minimum) value for the corresponding tire objective: minimized rolling resistance, minimized sound, minimized tire wear, maximized friction, maximized stiffness, and maximized contact patch size).

Three tire objective target scenarios are illustrated: "optimized rolling resistance by temperature actuation" **710**, "optimized rolling resistance by inflation actuation" **720**, and "maximized contact patch" **730**.

In the tire objective target scenario "optimized rolling resistance by temperature actuation" **710**, minimized rolling resistance is the goal, as illustrated by taking the extreme along the axis **701**. Obtainable intervals - subject to minimized rolling resistance and to employed actuation parameter (temperature) - for one or more of the other tire objectives ranges to the crossing of respective axes **702**, **703**, **704**, **705**, **706** by the double line representing this scenario **710** (or from some metric value higher than 0.0 but lower than the crossing of respective axes **702**, **703**, **704**, **705**, **706** by the double line). Alternatively or additionally, one or more of the other tire objectives automatically gets the metric value that corresponds to the crossing of respective axes **702**, **703**, **704**, **705**, **706** in this scenario. The minimized rolling resistance and the obtainable interval or metric value for the other tire objectives are examples of achievable boundaries defined by the tire objectives model **700**.

In the tire objective target scenario "optimized rolling resistance by inflation actuation" **720**, minimized rolling resistance is the goal, as illustrated by taking the extreme along the axis **701**. Obtainable intervals - subject to minimized rolling resistance and to employed actuation parameter (inflation) - for one or more of the other tire objectives ranges to the crossing of respective axes **702**, **703**, **704**, **705**, **706** by the dashed line representing this scenario **720** (or from some metric value higher than 0.0 but lower than the crossing of respective axes **702**, **703**, **704**, **705**, **706** by the dashed line). Alternatively or additionally, one or more of the other tire objectives automatically gets the metric value that corresponds to the crossing of respective axes **702**, **703**, **704**, **705**, **706** in this scenario. The minimized rolling resistance and the obtainable interval or metric value for the other tire objectives are examples of achievable boundaries defined by the tire objectives model **700**.

In the tire objective target scenario "maximized contact patch" **730**, maximized contact patch size is the goal, as illustrated by taking the extreme along the axis **706**. Obtainable intervals - subject to maximized contact patch size - for one or more of the other tire objectives ranges to the crossing of respective axes **701**, **702**, **703**, **704**, **705** by the solid line representing this scenario **730** (or from some metric value higher than 0.0 but lower than the crossing of respective axes **701**, **702**, **703**, **704**, **705** by the solid line). Alternatively or additionally, one or more of the other tire objectives automatically gets the metric value that corresponds to the crossing of respective axes **701**, **702**, **703**, **704**, **705** in this scenario. The maximized contact patch and the obtainable interval or metric value for the other tire objectives are examples of achievable boundaries defined by the tire objectives model **700**.

According to some examples, a tire objectives model may involve six tire objectives: rolling resistance (e.g., associated with vehicle fuel consumption or other energy usage, carbon dioxide emission, etc.), mileage (associated with durability for the vehicle), traction (associated with vehicle agility), stiffness (associated with vehicle handling), sound (associated with audio noise generated by the vehicle motion), and wet grip (associated with braking of the vehicle).

Generally, when a tire objective target scenario is subject to employed actuation parameter, the vehicle control system is not necessarily aware of which actuation parameter is employed for the scenario. For example, when the signal interface of generic nature is employed, the tire objectives model as obtained by the vehicle control system may only indicate one or more tire objective target scenario(s) and the corresponding obtainable ranges for the tire objectives.

Based on the tire objectives model, the vehicle control system can choose which tire objective(s) to prioritize (since the tire objectives model indicates what is possible to achieve simultaneously for the tire objectives) and communicate the prioritization together with the requested tire objectives of the tire control signal.

Alternatively or additionally, the vehicle control system can choose a specific tire objective target scenario from the tire objectives model and communicate the selected scenario in the tire control signal (i.e., implicitly communicating requested tire objectives).

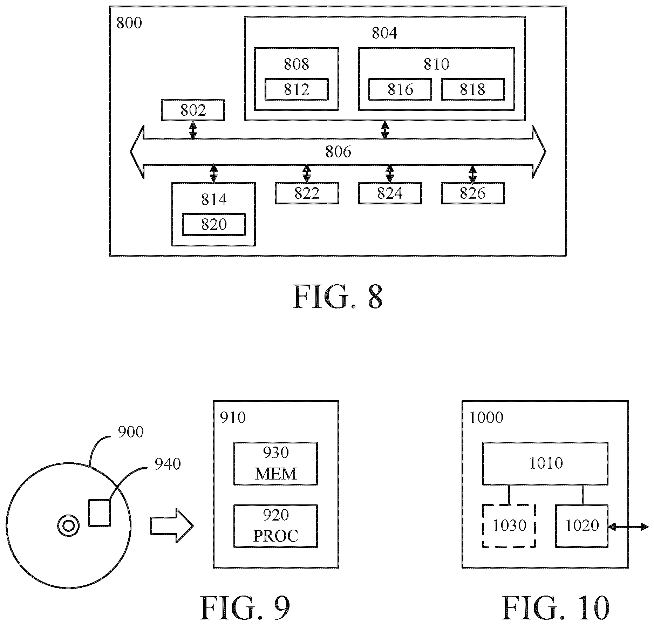

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804**, and a system bus **806.** The computer system **800** may include at least one computing device having the processing circuitry **802**. The system bus **806** provides an interface for system components including, but not limited to, the memory **804** and the processing circuitry **802**. The processing circuitry **802** may include any number of hardware components for conducting data or signal processing or for executing computer code stored in memory **804**. The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802**. A basic input/output system (BIOS) **812** may be stored in the non-volatile memory **808** and can include the basic routines that help to transfer information between elements within the computer system **800**.

The computer system **800** may further include or be coupled to a non-transitory computer-readable storage medium such as the storage device **814**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810**, which may include an operating system **816** and/or one or more program modules **818**. All or a portion of the examples disclosed herein may be implemented as a computer program **820** stored on a transitory or non-transitory computer-usable or computer-readable storage medium (e.g., single medium or multiple media), such as the storage device **814**, which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802**. In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802**. The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device
interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control system (e.g., a VCU) and/or in an actuator system.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 9** illustrates a computer program product exemplified as a non-transitory computer-readable medium in the form of a compact disc (CD) ROM **900**. The computer-readable medium has stored thereon program code **940** comprising instructions. The program code is loadable into processing circuitry (PROC; e.g., a data processing unit) **920**, which may, for example, be comprised in a device **910**, such as a vehicle control system (e.g., a VCU) and/or an actuator system. When loaded into the processing circuitry, the program code may be stored in a memory (MEM) **930** associated with, or comprised in, the processing circuitry. According to some examples, the program code may, when loaded into, and run by, the processing circuitry, cause execution of method steps according to, for example, any of the methods described herein.

**FIG. 10** schematically illustrates, in terms of a number of functional units, the components of a control unit **1000** according to some examples. This control unit **1000** may be comprised in the vehicle **200** (e.g., in the form of a vehicle control system (e.g., a VCU) and/or in an actuator system). Processing circuitry **1010** is provided using any combination of one or more of a suitable central processing unit CPU, multiprocessor, microcontroller, digital signal processor DSP, etc., capable of executing software instructions stored in a computer program product, e.g. in the form of a storage medium **1030**. The processing circuitry **1010** may further be provided as at least one application specific integrated circuit ASIC, or field programmable gate array FPGA.

Particularly, the processing circuitry **1010** is configured to cause the control unit **1000** to perform a set of operations, or steps, such as any of the methods discussed in connection to **FIGs. 4** and **5**.

Consequently, there is disclosed herein a control unit **1000** for controlling tire(s) of a heavy-duty vehicle **200** as described herein.

For example, the storage medium **1030** may store the set of operations, and the processing circuitry **1010** may be configured to retrieve the set of operations from the storage medium **1030** to cause the control unit **1000** to perform the set of operations. The set of operations may be provided as a set of executable instructions. Thus, the processing circuitry **1010** is thereby arranged to execute methods as herein disclosed. In particular, there is disclosed a control unit **1000** for controlling an articulated vehicle **200** comprising a tractor **210** and/or one or more towed vehicle units **211**, the control unit comprising processing circuitry **1010**, an interface **1020** coupled to the processing circuitry **1010**, and a memory **1030** coupled to the processing circuitry **1010**, wherein the memory comprises machine readable computer program instructions that, when executed by the processing circuitry, causes the control unit to perform the methods discussed herein.

The storage medium **1030** may also comprise persistent storage, which, for example, can be any single one or combination of magnetic memory, optical memory, solid state memory or even remotely mounted memory.

The control unit **1000** may further comprise an interface **1020** for communications with at least one external device. As such, the interface **1020** may comprise one or more transmitters and receivers, comprising analogue and digital components and a suitable number of ports for wireline or wireless communication.

The processing circuitry **1010** controls the general operation of the control unit **1000,** e.g., by sending data and control signals to the interface **1020** and the storage medium **1030,** by receiving data and reports from the interface **1020**, and by retrieving data and instructions from the storage medium **1030**. Other components, as well as the related functionality, of the control node are omitted in order not to obscure the concepts presented herein.

### A non-exhaustive list of examples:

**Example 1**: A signal interface for tire control, wherein the signal interface is applicable for communication between a vehicle control system and an actuator system configured to dynamically change tire properties, the signal interface comprising connection circuitry configured to: convey a tire report signal from the actuator system to the vehicle control system, wherein the tire report signal is indicative of a current status of dynamically variable tire objective(s) capabilities; and convey a tire control signal from the vehicle control system to the actuator system, wherein the tire control signal is indicative of one or more requested tire objective(s) determined based on the current status of dynamically variable tire objective(s) capabilities, and wherein each of the tire objective(s) indicates a tire property which is controllable by the actuator system.

**Example 2**: The signal interface of **Example 1**, wherein at least one of the tire objective(s) indicates a tire property which is only indirectly controllable by the actuator system.

**Example 3**: The signal interface of any of **Examples 1-2**, wherein the tire objective(s) include one or more of: a rolling resistance metric, a contact patch metric, a lateral force metric, a tire-ground grip metric, a tire wear metric, a stiffness metric, an audio metric, and a damping metric.

**Example 4**: The signal interface of any of **Examples 1-3**, wherein the current status of dynamically variable tire objective(s) capabilities indicates a currently obtainable interval for the tire property of at least one of the tire objective(s).

**Example 5**: The signal interface of any of **Examples 1-4**, wherein the tire control signal is further indicative of a priority among the requested tire objective(s).

**Example 6**: A vehicle control system comprising the signal interface of any of **Examples 1-5**, and processing circuitry configured to: obtain a tire report signal from an actuator system via the signal interface, wherein the tire report signal is indicative of a current status of dynamically variable tire objective(s) capabilities; determine one or more requested tire objective(s) based on the current status of dynamically variable tire objective(s) capabilities, wherein each of the tire objective(s) indicates a tire property which is controllable by the actuator system; and provide a tire control signal to the actuator system via the signal interface, wherein the tire control signal is indicative of the one or more requested tire objective(s).

**Example 7**: The vehicle control system of **Example 6,** wherein the processing circuitry is configured to determine the one or more requested tire objective(s) to lie within the current status of dynamically variable tire objective(s) capabilities.

**Example 8**: The vehicle control system of any of **Examples 6-7**, wherein the processing circuitry is further configured to determine a priority among the requested tire objective(s).

**Example 9**: The vehicle control system of any of **Examples 6-8**, wherein the processing circuitry is configured to determine the one or more requested tire objective(s) further based on a motion request and/or a driving mode.

**Example 10**: The vehicle control system of any of **Examples 6-9**, wherein the processing circuitry is further configured to: obtain a tire objectives model indicative of dependency between two or more tire objectives; and determine one or more requested tire objective(s) further based on the tire objectives model.

**Example 11**: The vehicle control system of **Example 10**, wherein the tire objectives model comprises a plurality of tire objective target scenarios.

**Example 12**: The vehicle control system of **Example 11**, wherein the tire objective target scenarios include one or more of: maximization of a particular tire objective metric, minimization of a particular tire objective metric, maximization of a function of two or more tire objective metrics, and minimization of a function of two or more tire objective metrics.

**Example 13**: The vehicle control system of any of **Examples 11-12**, wherein a tire objective target scenario defines respective available tire objective ranges subject to fulfillment of the tire objective target.

**Example 14**: The vehicle control system of any of **Examples 11-13**, wherein a tire objective target scenario defines respective available tire objective ranges subject to an employed actuation parameter.

**Example 15**: The vehicle system of **Example 14**, wherein the employed actuation parameter comprises a tire property which is directly controllable by the actuator system.

**Example 16**: The vehicle control system of any of **Examples 10-15**, wherein the processing circuitry is configured to determine the one or more requested tire objective(s) to lie within achievable boundaries defined by the tire objectives model.

**Example 17**: An actuator system comprising the signal interface of any of **Examples 1-5**, one or more tire actuators configured to dynamically change tire properties, and processing circuitry configured to: determine a current status of dynamically variable tire objective(s) capabilities; provide a tire report signal to a vehicle control system via the signal interface, wherein the tire report signal is indicative of the current status of dynamically variable tire objective(s) capabilities; obtain a tire control signal from the vehicle control system via the signal interface, wherein the tire control signal is indicative of one or more requested tire objective(s) determined based on the current status of dynamically variable tire objective(s) capabilities, and wherein each of the tire objective(s) indicates a tire property which is controllable by the actuator system; and use the one or more tire actuators to perform tire control according to the one or more requested tire objective(s).

**Example 18**: The actuator system of **Example 17**, wherein at least one of the tire objective(s) indicates a tire property which is only indirectly controllable by the actuator system, and wherein the processing circuitry is further configured to transform the requested tire objective(s) to an indication of tire properties which is directly controllable by the actuator system.

**Example 19**: The actuator system of any of **Examples 17-18**, wherein the processing circuitry is further configured to provide a tire objectives model to the vehicle control system, wherein the tire objectives model is indicative of dependency between two or more tire objectives, and wherein the one or more requested tire objective(s) are further based on the tire objectives model.

**Example 20**: A vehicle control system comprising processing circuitry configured to: obtain a tire objectives model indicative of dependency between two or more tire objectives; determine one or more requested tire objective(s) based on the tire objectives model, wherein each of the tire objective(s) indicates a tire property which is controllable by an actuator system configured to dynamically change tire properties; and provide a tire control signal to the actuator system via a signal interface, wherein the tire control signal is indicative of the one or more requested tire objective(s).

**Example 21:** The vehicle control system of **Example 20**, wherein the tire objectives model comprises a plurality of tire objective target scenarios.

**Example 22**: The vehicle control system of **Example 21,** wherein the tire objective target scenarios include one or more of: maximization of a particular tire objective metric, minimization of a particular tire objective metric, maximization of a function of two or more tire objective metrics, and minimization of a function of two or more tire objective metrics.

**Example 23**: The vehicle control system of any of **Examples 21-22,** wherein a tire objective target scenario defines respective available tire objective ranges subject to fulfillment of the tire objective target.

**Example 24**: The vehicle control system of any of **Examples 21-23**, wherein a tire objective target scenario defines respective available tire objective ranges subject to an employed actuation parameter.

**Example 25**: The vehicle system of **Example 24**, wherein the employed actuation parameter comprises a tire property which is directly controllable by the actuator system.

**Example 26**: The vehicle control system of any of **Examples 20-25**, wherein the processing circuitry is configured to determine the one or more requested tire objective(s) to lie within achievable boundaries defined by the tire objectives model.

**Example 27**: The vehicle control system of any of **Examples 20-26**, wherein the processing circuitry is further configured to obtain a tire report signal from the actuator system, wherein the tire report signal is indicative of a current status of dynamically variable tire objective(s) capabilities, and wherein the processing circuitry is configured to determine the one or more requested tire objective(s) further based on the current status of dynamically variable tire objective(s) capabilities.

**Example 28**: The vehicle control system of any of **Examples 20-27,** wherein the processing circuitry is configured to determine the one or more requested tire objective(s) further based on a motion request and/or a driving mode.

**Example 29**: The vehicle control system of any of **Examples 20-28**, wherein the tire objective(s) include one or more of: a rolling resistance metric, a contact patch metric, a lateral force metric, a tire-ground grip metric, a tire wear metric, a stiffness metric, an audio metric, and a damping metric.

**Example 30**: An actuator system comprising one or more tire actuators configured to dynamically change tire properties, and processing circuitry configured to: provide a tire objectives model to a vehicle control system, wherein the tire objectives model is indicative of dependency between two or more tire objectives; obtain a tire control signal from the vehicle control system via a signal interface, wherein the tire control signal is indicative of the one or more requested tire objective(s) determined based on the tire objectives model, and wherein each of the tire objective(s) indicates a tire property which is controllable by the actuator system; and use the one or more tire actuators to perform tire control according to the one or more requested tire objective(s).

**Example 31:** The actuator system of **Example 30**, wherein at least one of the tire objective(s) indicates a tire property which is only indirectly controllable by the actuator system, and wherein the processing circuitry is further configured to transform the requested tire objective(s) to an indication of tire properties which is directly controllable by the actuator system.

**Example 32**: An arrangement for tire control of a vehicle, the arrangement comprising the vehicle control system of any of **Examples 6-16** and the actuator system of any of **Examples 17-19**, wherein the vehicle control system and the actuator system are configured to communicate with each other via the signal interface of any of **Examples 1-5**.

**Example 33**: An arrangement for tire control of a vehicle, the arrangement comprising the vehicle control system of any of **Examples 20-29** and the actuator system of any of **Examples 30-31**.

**Example 34**: A vehicle comprising one or more of: the signal interface of any of **Examples 1-5**, the vehicle control system of any of **Examples 6-16**, the actuator system of any of **Examples 17-19**, the vehicle control system of any of **Examples 20-29** the actuator system of any of **Examples 30-31**and the arrangement of any of **Examples 32-33**.

**Example 35**: A computer-implemented method for tire control, the method comprising: obtaining (by processing circuitry of a computer system) a tire report signal from an actuator system configured to dynamically change tire properties, wherein the tire report signal is indicative of a current status of dynamically variable tire objective(s) capabilities; determining (by the processing circuitry) one or more requested tire objective(s) based on the current status of dynamically variable tire objective(s) capabilities, wherein each of the tire objective(s) indicates a tire property which is controllable by the actuator system; and providing (by the processing circuitry) a tire control signal to the actuator system, wherein the tire control signal is indicative of the one or more requested tire objective(s).

**Example 36**: A computer-implemented method for tire control, the method comprising: determining (by processing circuitry of a computer system) a current status of dynamically variable tire objective(s) capabilities; providing (by the processing circuitry) a tire report signal to a vehicle control system via the signal interface, wherein the tire report signal is indicative of the current status of dynamically variable tire objective(s) capabilities; obtaining (by the processing circuitry) a tire control signal from the vehicle control system via the signal interface, wherein the tire control signal is indicative of one or more requested tire objective(s) determined based on the current status of dynamically variable tire objective(s) capabilities, and wherein each of the tire objective(s) indicates a tire property which is controllable by the actuator system; and using (by the processing circuitry) the one or more tire actuators to perform tire control according to the one or more requested tire objective(s).

**Example 37**: A computer-implemented method for tire control, the method comprising: obtaining (by processing circuitry of a computer system) a tire objectives model indicative of dependency between two or more tire objectives; determining (by the processing circuitry) one or more requested tire objective(s) based on the tire objectives model, wherein each of the tire objective(s) indicates a tire property which is controllable by an actuator system configured to dynamically change tire properties; and providing (by the processing circuitry) a tire control signal to the actuator system via a signal interface, wherein the tire control signal is indicative of the one or more requested tire objective(s).

**Example 38**: A computer-implemented method for tire control, the method comprising: providing (by processing circuitry of a computer system) a tire objectives model to a vehicle control system, wherein the tire objectives model is indicative of dependency between two or more tire objectives; obtaining (by the processing circuitry) a tire control signal from the vehicle control system via a signal interface, wherein the tire control signal is indicative of the one or more requested tire objective(s) determined based on the tire objectives model, and wherein each of the tire objective(s) indicates a tire property which is controllable by the actuator system; and using (by the processing circuitry) the one or more tire actuators to perform tire control according to the one or more requested tire objective(s).

**Example 39**: A computer program product comprising program code for performing, when executed by the processing circuitry, the method of any of **Examples 35-39**.

**Example 40**: A non-transitory computer-readable storage medium comprising instructions, which when executed by the processing circuitry, cause the processing circuitry to perform the method of any of **Examples 35-39.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A signal interface (110, 330, 420, 520) for tire control, wherein the signal interface is applicable for communication between a vehicle control system (120, 310, 410, 510) and an actuator system (130, 320, 430, 530) configured to dynamically change tire properties, the signal interface comprising connection circuitry configured to:
convey a tire report signal (392, 492, 592) from the actuator system to the vehicle control system, wherein the tire report signal is indicative of a current status of dynamically variable tire objective(s) capabilities; and
convey a tire control signal (394, 493, 593) from the vehicle control system to the actuator system, wherein the tire control signal is indicative of one or more requested tire objective(s) determined based on the current status of dynamically variable tire objective(s) capabilities, and wherein each of the tire objective(s) indicates a tire property which is controllable by the actuator system.

2. The signal interface of claim 1, wherein at least one of the tire objective(s) indicates a tire property which is only indirectly controllable by the actuator system.

3. The signal interface of any of claims 1-2, wherein the tire objective(s) include one or more of: a rolling resistance metric, a contact patch metric, a lateral force metric, a tire-ground grip metric, a tire wear metric, a stiffness metric, an audio metric, and a damping metric.

4. The signal interface of any of claims 1-3, wherein the current status of dynamically variable tire objective(s) capabilities indicates a currently obtainable interval for the tire property of at least one of the tire objective(s).

5. The signal interface of any of claims 1-4, wherein the tire control signal is further indicative of a priority among the requested tire objective(s).

6. A vehicle control system (120, 310, 410, 510) comprising the signal interface (110, 330, 420, 520) of any of claims 1-5, and processing circuitry (290, 311) configured to:
obtain a tire report signal (392, 492, 592) from an actuator system (130, 320, 430, 530) via the signal interface, wherein the tire report signal is indicative of a current status of dynamically variable tire objective(s) capabilities;
determine one or more requested tire objective(s) based on the current status of dynamically variable tire objective(s) capabilities, wherein each of the tire objective(s) indicates a tire property which is controllable by the actuator system; and
provide a tire control signal (394, 493, 593) to the actuator system via the signal interface, wherein the tire control signal is indicative of the one or more requested tire objective(s).

7. The vehicle control system of claim 6, wherein the processing circuitry is configured to determine the one or more requested tire objective(s) to lie within the current status of dynamically variable tire objective(s) capabilities.

8. The vehicle control system of any of claims 6-7, wherein the processing circuitry is further configured to determine a priority among the requested tire objective(s).

9. The vehicle control system of any of claims 6-8, wherein the processing circuitry is configured to determine the one or more requested tire objective(s) further based on a motion request (393) and/or a driving mode.

10. An actuator system (130, 320, 430, 530) comprising the signal interface (110, 330, 420, 520) of any of claims 1-5, one or more tire actuators (325) configured to dynamically change tire properties, and processing circuitry (321) configured to:
determine a current status of dynamically variable tire objective(s) capabilities;
provide a tire report signal (392, 492, 592) to a vehicle control system (120, 310, 410, 510) via the signal interface, wherein the tire report signal is indicative of the current status of dynamically variable tire objective(s) capabilities;
obtain a tire control signal (394, 493, 593) from the vehicle control system via the signal interface, wherein the tire control signal is indicative of one or more requested tire objective(s) determined based on the current status of dynamically variable tire objective(s) capabilities, and wherein each of the tire objective(s) indicates a tire property which is controllable by the actuator system; and
use the one or more tire actuators to perform tire control according to the one or more requested tire objective(s).

11. The actuator system of claim 10, wherein at least one of the tire objective(s) indicates a tire property which is only indirectly controllable by the actuator system, and wherein the processing circuitry is further configured to transform the requested tire objective(s) to an indication of tire properties which is directly controllable by the actuator system.

12. An arrangement (100) for tire control of a vehicle, the arrangement comprising the vehicle control system (120, 310, 410, 510) of any of claims 6-9 and the actuator system (130, 320, 430, 530) of any of claims 10-11, wherein the vehicle control system and the actuator system are configured to communicate with each other via the signal interface (110, 330, 420, 520) of any of claims 1-5.

13. A vehicle (200) comprising one or more of: the signal interface (110, 330, 420, 520) of any of claims 1-5, the vehicle control system (120, 310, 410, 510) of any of claims 6-9, the actuator system (130, 320, 430, 530) of any of claims 10-11, and the arrangement (100) of claim 12.

14. A computer-implemented method (400) for tire control, the method comprising:
obtaining (403), by processing circuitry of a computer system, a tire report signal from an actuator system configured to dynamically change tire properties, wherein the tire report signal is indicative of a current status of dynamically variable tire objective(s) capabilities;
determining (404), by the processing circuitry, one or more requested tire objective(s) based on the current status of dynamically variable tire objective(s) capabilities, wherein each of the tire objective(s) indicates a tire property which is controllable by the actuator system; and
providing (405), by the processing circuitry, a tire control signal to the actuator system, wherein the tire control signal is indicative of the one or more requested tire objective(s).

15. A computer program product (900) comprising program code for performing, when executed by processing circuitry, the method of claim 14.

16. A non-transitory computer-readable storage medium (900) comprising instructions, which when executed by the processing circuitry, cause the processing circuitry to perform the method of claim 14.

## Amended claims

### Amended claims in accordance with Rule 137(2) EPC.

1. A signal interface (110, 330, 420, 520) for tire control, wherein the signal interface is applicable for communication between a vehicle control system (120, 310, 410, 510) and an actuator system (130, 320, 430, 530) configured to dynamically change tire properties, the signal interface comprising connection circuitry which when in use:
conveys a tire report signal (392, 492, 592) from the actuator system to the vehicle control system, wherein the tire report signal is indicative of a current status of dynamically variable tire objective(s) capabilities; and
conveys a tire control signal (394, 493, 593) from the vehicle control system to the actuator system, wherein the tire control signal is indicative of one or more requested tire objective(s) determined based on the current status of dynamically variable tire objective(s) capabilities, and wherein each of the tire objective(s) indicates a tire property which is controllable by the actuator system.

2. A vehicle control system (120, 310, 410, 510) comprising a signal interface (110, 330, 420, 520) for tire control and processing circuitry (290, 311) configured to:
obtain - via the signal interface - a tire report signal (392, 492, 592) from an actuator system (130, 320, 430, 530) configured to dynamically change tire properties, wherein the tire report signal is indicative of a current status of dynamically variable tire objective(s) capabilities;
determine one or more requested tire objective(s) based on the current status of dynamically variable tire objective(s) capabilities, wherein each of the tire objective(s) indicates a tire property which is controllable by the actuator system; and
provide - via the signal interface - a tire control signal (394, 493, 593) to the actuator system, wherein the tire control signal is indicative of the one or more requested tire objective(s),
wherein the signal interface is applicable for communication between the vehicle control system and the actuator system, and the signal interface comprises connection circuitry configured to convey the tire report signal from the actuator system to the vehicle control system, and convey the tire control signal from the vehicle control system to the actuator system.

3. The vehicle control system of claim 2, wherein the processing circuitry is configured to determine the one or more requested tire objective(s) to lie within the current status of dynamically variable tire objective(s) capabilities.

4. The vehicle control system of any of claims 2-3, wherein the processing circuitry is further configured to determine a priority among the requested tire objective(s).

5. The vehicle control system of any of claims 2-4, wherein the processing circuitry is configured to determine the one or more requested tire objective(s) further based on a motion request (393) and/or a driving mode.

6. The vehicle control system of any of claims 2-5, wherein at least one of the tire objective(s) indicates a tire property which is only indirectly controllable by the actuator system.

7. The vehicle control system of any of claims 2-6, wherein the tire objective(s) include one or more of: a rolling resistance metric, a contact patch metric, a lateral force metric, a tire-ground grip metric, a tire wear metric, a stiffness metric, an audio metric, and a damping metric.

8. The vehicle control system of any of claims 2-7, wherein the current status of dynamically variable tire objective(s) capabilities indicates a currently obtainable interval for the tire property of at least one of the tire objective(s).

9. The vehicle control system of any of claims 2-8, wherein the tire control signal is further indicative of a priority among the requested tire objective(s).

10. An actuator system (130, 320, 430, 530) comprising a signal interface (110, 330, 420, 520) for tire control, one or more tire actuators (325) configured to dynamically change tire properties, and processing circuitry (321) configured to:
determine a current status of dynamically variable tire objective(s) capabilities;
provide - via the signal interface - a tire report signal (392, 492, 592) to the vehicle control system , wherein the tire report signal is indicative of the current status of dynamically variable tire objective(s) capabilities;
obtain - via the signal interface - a tire control signal (394, 493, 593) from the vehicle control system, wherein the tire control signal is indicative of one or more requested tire objective(s) determined based on the current status of dynamically variable tire objective(s) capabilities, and wherein each of the tire objective(s) indicates a tire property which is controllable by the actuator system; and
use the one or more tire actuators to perform tire control according to the one or more requested tire objective(s),
wherein the signal interface is applicable for communication between the vehicle control system and the actuator system, and the signal interface comprises connection circuitry configured to convey the tire report signal from the actuator system to the vehicle control system, and convey the tire control signal from the vehicle control system to the actuator system.

11. The actuator system of claim 10, wherein at least one of the tire objective(s) indicates a tire property which is only indirectly controllable by the actuator system, and wherein the processing circuitry is further configured to transform the requested tire objective(s) to an indication of tire properties which is directly controllable by the actuator system.

12. The actuator system of any of claims 10-11, wherein at least one of the tire objective(s) indicates a tire property which is only indirectly controllable by the actuator system.

13. The actuator system of any of claims 10-12, wherein the tire objective(s) include one or more of: a rolling resistance metric, a contact patch metric, a lateral force metric, a tire-ground grip metric, a tire wear metric, a stiffness metric, an audio metric, and a damping metric.

14. The actuator system of any of claims 10-13, wherein the current status of dynamically variable tire objective(s) capabilities indicates a currently obtainable interval for the tire property of at least one of the tire objective(s).

15. The actuator system of any of claims 10-14, wherein the tire control signal is further indicative of a priority among the requested tire objective(s).

16. An arrangement (100) for tire control of a vehicle, the arrangement comprising the vehicle control system (120, 310, 410, 510) of any of claims 2-9 and the actuator system (130, 320, 430, 530) of any of claims 10-15.

17. A vehicle (200) comprising one or more of: the signal interface (110, 330, 420, 520) of claim 1, the vehicle control system (120, 310, 410, 510) of any of claims 2-9, the actuator system (130, 320, 430, 530) of any of claims 10-15, and the arrangement (100) of claim 16.

18. A computer-implemented method (400) for tire control, the method comprising:
obtaining (403), by processing circuitry of a computer system, a tire report signal from an actuator system configured to dynamically change tire properties, wherein the tire report signal is indicative of a current status of dynamically variable tire objective(s) capabilities;
determining (404), by the processing circuitry, one or more requested tire objective(s) based on the current status of dynamically variable tire objective(s) capabilities, wherein each of the tire objective(s) indicates a tire property which is controllable by the actuator system; and
providing (405), by the processing circuitry, a tire control signal to the actuator system, wherein the tire control signal is indicative of the one or more requested tire objective(s).

19. A computer-implemented method (450) for tire control, the method comprising:
determining (452), by processing circuitry of a computer system, a current status of dynamically variable tire objective(s) capabilities;
providing (453), by the processing circuitry, a tire report signal to a vehicle control system, wherein the tire report signal is indicative of the current status of dynamically variable tire objective(s) capabilities;
obtaining (455), by the processing circuitry, a tire control signal from the vehicle control system, wherein the tire control signal is indicative of one or more requested tire objective(s) determined based on the current status of dynamically variable tire objective(s) capabilities, and wherein each of the tire objective(s) indicates a tire property which is controllable by the actuator system; and
using (456), by the processing circuitry, the one or more tire actuators to perform tire control according to the one or more requested tire objective(s).

20. A computer program product (900) comprising program code for performing, when executed by processing circuitry, the method of any of claims 18-19.

21. A non-transitory computer-readable storage medium (900) comprising instructions, which when executed by the processing circuitry, cause the processing circuitry to perform the method of any of claims 18-19.
